(19) Europäisches Patentamt
European Patent Office
Office européen des brevets

(11) **EP 2 257 011 A1**

(12) **EUROPEAN PATENT APPLICATION**

(43) Date of publication:
**01.12.2010 Bulletin 2010/48**

(51) Int Cl.:
*H04L 27/26* (2006.01)          *H04L 25/02* (2006.01)
*H04L 25/03* (2006.01)

(21) Application number: **09007209.1**

(22) Date of filing: **29.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Universität Duisburg-Essen**
**45141 Essen (DE)**

(72) Inventors:
• **Viessmann, Alexander**
**4541 Essen (DE)**
• **Burnic, Admir**
**45141 Essen (DE)**

• **Scheiber, Ernest**
**45141 Essen (DE)**
• **Bai, Zijian**
**45141 Essen (DE)**
• **Bruck, Guido Dr.**
**46562 Voerde (DE)**
• **Jung, Peter, Prof. Dr. habil.**
**47051 Duisburg (DE)**

(74) Representative: **Zimmermann, Tankred Klaus et al**
**Schoppe, Zimmermann, Stöckeler & Zinkler**
**Patentanwälte**
**Postfach 246**
**82043 Pullach bei München (DE)**

(54) **A circuit for providing a soft output**

(57) The circuit (100) for providing a soft output based on a baseband representation of a multicarrier signal, the multicarrier signal having at least two subcarriers, the baseband representation having a frequency error ($\Delta f$), the frequency error ($\Delta f$) introducing a coupling between the at least two subcarriers. The circuit (100) comprises a channel estimator (110) for estimating a radio channel based on the baseband representation, the estimated radio channel comprises an estimate on the coupling between the two subcarriers in the baseband. The circuit (100) further comprises an equalizer (120) for providing the soft output based on the estimated radio channel and the baseband representation.

FIG 1

**Description**

The present invention is in the field of channel estimation and equalization as, for example, carried out for multicarrier communication.

In state of the art communication systems transmission band frequencies, i.e. frequencies, which are used for actual transmission of the signals, and baseband frequencies, i.e. frequencies corresponding to the bandwidth of the actual information signals, can differ significantly. Especially in wireless communications, transmission band frequencies can be orders of magnitudes higher than the actual baseband signal bandwidth. Therefore conversion between the transmission band and the baseband is performed. Whenever such conversion is carried out, conversion signals are needed, which, for example, correspond to locally generated signals preferably having the carrier frequency of the transmission band.

In conventional systems frequency offsets occur, whenever the frequency of the conversion signal does not match the actual carrier frequency of the transmission band. These frequency offsets may cause disadvantages when detecting or estimating the transmitted data. For example, when OFDM (Orthogonal Frequency Division Multiplexing) signals are used, it is important, that after downconverting the OFDM signal from the transmission band to the baseband, the down-converted subcarrier frequencies match to a certain extent the subcarrier frequencies on the transmitter side. High mismatches or frequency offsets can cause degradation of the entire system performance.

Multicarrier Communication systems are widely spread, for example, as commercial wireless communication systems where such conversions and the above-mentioned problems occur on both sides of the transmission, at the terminal as well as at the base station. Moreover, such problems may also occur in WLAN (Wireless Local Area Networks), WPAN (Wireless Personal Area Networks), UWB (Ultra Wide Band) etc.

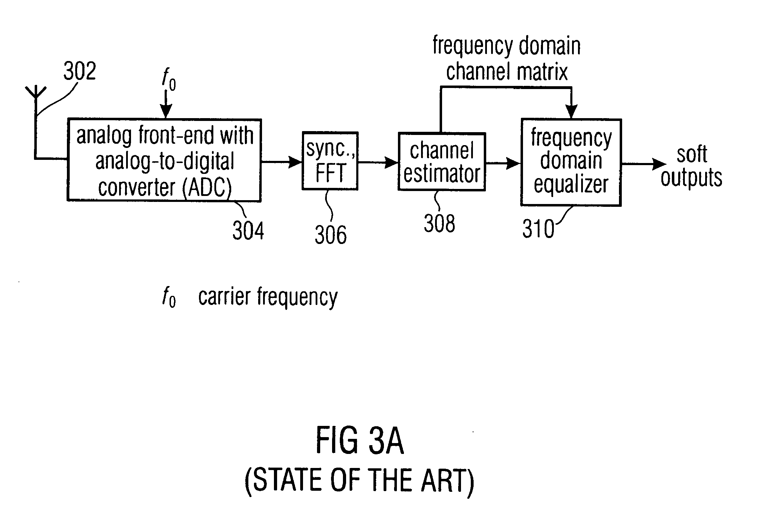

Fig. 3a shows a state of the art conventional receiver structure in a multicarrier transmission scenario. Fig. 3a shows on the left-hand side a receive antenna 302 followed by an analog front-end 304 with an analog-to-digital converter (ADC). The analog front-end 304 is followed by a synchronization module 306 which contains a fast Fourier transform (FFT). The synchronization module 306 is followed by a channel estimator 308 and a frequency domain equalizer 310.

According to Fig. 3a, first, a radio wave is received by the receive antenna 302 and converted into a radio frequency (RF) signal, which is then provided to the analog front-end 304. The analog front-end 304 then downconverts the radio frequency signal into the baseband, for example, by a homodyne scheme using a known carrier frequency $f_0$ of the radio frequency signal. Heterodyne or superheterodyne concepts are conceivable in a similar way. The carrier frequency $f_0$ is locally generated, and its quality, i.e. the precision of its frequency determines the performance and quality of the following system. In Fig. 3a, as an example, the baseband signal is also digitized, i.e. converted into the digital domain by the analog front-end 304 using an analog-to-digital converter (ADC). The output of the ADC is a digital signal in the time domain. The digital signal in the time domain is then provided to the synchronizer module 306, which may first select the samples to be processed by an FFT unit, in the example shown in Fig. 3a the FFT unit is also integrated in the synchronization module 306.

In some conventional systems, especially in OFDM systems, the sample selection process is sometimes called "cyclic prefix removal", when cyclic prefixes have been transmitted. These systems use a technique, in which parts of an OFDM word are repeated, in order to combat the effects of multipath propagation. In other words, an OFDM word is generated in the time domain, the actual transmission word is generated by either appending the OFDM word's end to its beginning, the so-called cyclic prefix, or the transmission word is assembled by repeating the beginning of the OFDM word at its end, the so-called postfix. One task of the synchronization module 306 in Fig. 3a is then to select from the digital signal in the time domain a part, which in its length or number of samples corresponds to the original OFDM word.

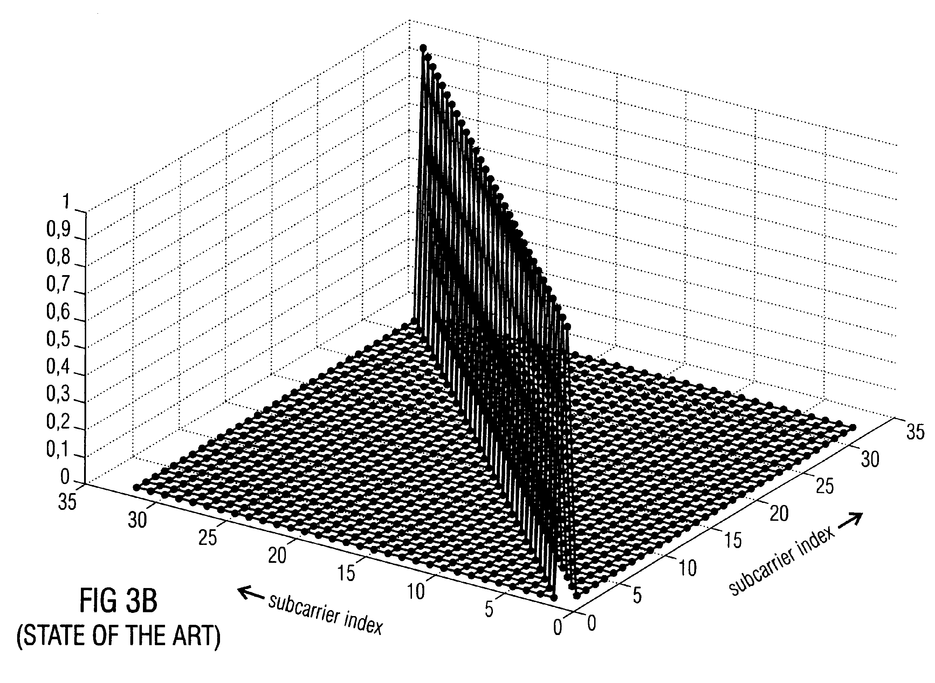

This part is then converted into the frequency domain, which is carried out by the FFT within the synchronization module 306 in Fig. 3a. The FFT converts the digital signal from the time domain to the frequency domain. In the frequency domain, the channel estimator 308 can then adaptively estimate the channel properties. In an ideal conventional multicarrier system, all $Q$, $Q \in \Box$, subcarriers are mutually independent from each other, i.e. there is no intercarrier interference (ICI). Furthermore, owing to the small bandwidth of each subcarrier in such systems, each subcarrier $q, q=1..Q$ is received over a single tap channel, characterized by a time varying complex tap coefficient. Let $\underline{H}_q$ be the complex tap coefficient of subcarrier Q. Then the channel estimator has to estimate all $Q$ complex tap coefficients $\underline{H}_q$, $q=1..Q$, and provide them to the frequency domain equalizer 310. In the general case depicted in Fig. 3a the coefficients can be represented by a frequency domain channel matrix, which is a diagonal matrix, consisting of these complex tap coefficients. An example of such a frequency domain channel matrix is depicted in Fig. 3b.

Fig. 3b shows a three dimensional illustration of a radio channel matrix of a multicarrier system. Fig. 3b exemplifies a system utilizing 30 subcarriers, in which perfect carrier frequency generation at the analog front-end 304 is assumed. This can be derived from Fig. 3b, since no cross-talk between the subcarriers, i.e. no ICI, occurs. The radio channel matrix depicted in Fig. 3b only has diagonal elements different from zero, i.e. the individual subcarrier signals do not influence or interfere each other.

As shown in Fig. 3a, the frequency domain equalizer 310 then determines the soft output for each transmitted data sample, which can, for example, be further processed by succeeding receiver stages, which are not illustrated further in Fig. 3a.

As already mentioned above, at the analog front-end 304 in Fig. 3a, and generally in receiver stages, non-perfect local oscillators (LO) are utilized. These local oscillators are non-perfect, as the carrier frequency that is generated by said oscillators does not perfectly match the actual carrier frequency of the system in the transmission band. Therefore, a perfect down-conversion of the RF signal into the baseband cannot be accomplished. Typically, the frequency of a LO in the receiver differs from the carrier frequency $f_0$ by an offset of $\Delta f$. This requires a more robust reception and, in particular, interpolation at the output of the ADC to make sure that the sample set selection can be accomplished properly. In conventional systems, the potentially large frequency offsets $\Delta f$ are overcome by utilizing stabilized and usually costly LOs. Moreover, concepts as automatic frequency correction (AFC) are carried out in the mixed signal domain, which may also include the necessary interpolation.

It is a disadvantage of conventional systems, that such stabilized and high precision local oscillators have to be used, contributing significantly to the cost of such receivers. Especially in low-cost receivers compromises with respect to the performance have to be made.

It is therefore the object of the present invention to provide an improved concept for generating soft outputs from multicarrier signals.

The object is achieved by a circuit according to claim 1, a receiver according to claim 9 and a method according to claim 14.

The present invention is based on the finding that frequency offsets can be considered in channel estimation and signal equalization. Imperfections arising from improper choice of the frequency of a local oscillator in a receiver can be at least partly compensated by considering such offsets in a subsequent channel estimation and signal equalization. Moreover, it is a finding of the present invention that especially when signals with cyclic pre- or postfixes are used for transmission, concepts of tail biting codes as used in channel coding may be reused for signal equalization.

Embodiments of the present invention may provide the advantage that sophisticated channel estimation and equalization concepts allow relaxation of requirements of local oscillators and automatic frequency correction. Embodiments may enable receivers with enhanced performance and reduced costs.

Embodiments may enable circumvention of cumbersome accurate local oscillators as well as AFC by enabling less stringent requirements and/or respective compensation by enhanced channel estimation and equalization performance.

Embodiments of the present invention will be detailed using the accompanying figures, in which

Fig. 1       shows an embodiment of a circuit in an embodiment of a receiver;

Fig. 2a      shows another embodiment of a receiver structure;

Fig. 2b      shows an embodiment of a right circulant channel matrix;

Fig. 2c      shows different options for equalization in embodiments;

Fig. 3a      shows a state of the art receiver structure; and

Fig. 3b      shows a conventionally estimated radio channel matrix.

In the following embodiments will be described in detail referring to multicarrier signals, as they are used in wireless communication systems, for example, in OFDM systems. Generally, embodiments of the present invention are based on the finding that drawbacks evoked by frequency offsets when down-converting from a transmission band to a baseband can be reduced by embodiments of the channel estimator and the equalizer, for which the details will be provided subsequently. Generally, these concepts can also be used with wired transmission, where multicarrier signals and down-conversion are used in a similar fashion.

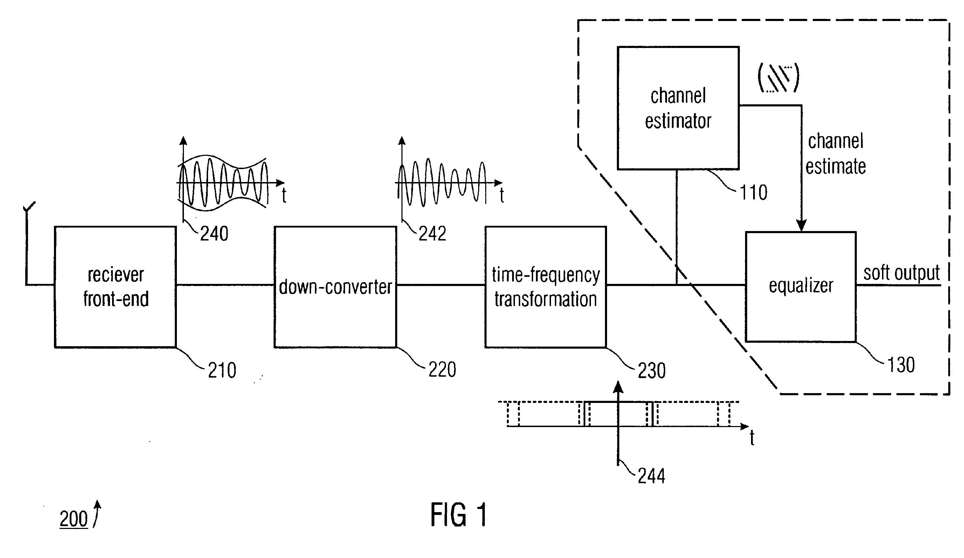

Fig. 1 shows an embodiment of a circuit 100 for providing a soft output based on a baseband representation of a multicarrier signal, the multicarrier signal having at least two subcarriers, the baseband representation having a frequency error $\Delta f$, the frequency error $\Delta f$ introducing a coupling between the at least two subcarriers. The circuit 100 comprises a channel estimator 110 for estimating a radio channel based on the baseband representation, the estimated radio channel comprises an estimate on the coupling between the two subcarriers in the baseband. Moreover, the circuit 100 comprises an equalizer 120 for providing the soft output based on the estimated radio channel and the baseband representation.

In other words, a multicarrier signal having a frequency error, as it for example occurs if the frequency of a local oscillator in a receiver does not match the actual carrier frequency, can be equalized more effectively, by estimating the coupling between the subcarriers. The coupling between the subcarriers may correspond to intercarrier interference, which is evoked by the frequency error. Due to the frequency error, the subcarriers, which are downconverted from the transmission band are not precisely mapped on the subcarrier frequencies as they had been transmitted. Therefore, a coupling or cross-talk or interference may occur between mutual subcarriers. This coupling can be estimated by the channel estimator 110 and then correspondingly considered by the equalizer 120.

In embodiments the channel estimator 110 can be adapted for estimating the frequency error $\Delta f$ and at least one complex radio channel coefficient for each of the at least two subcarriers. The channel estimator 110 can be further adapted for determining the coupling in terms of at least one additional complex channel coefficient, for each of the at least two subcarriers based on the frequency error $\Delta f$ and the at least one complex radio coefficient for each of the least two subcarriers.

In other words, the channel estimator 110 may estimate one complex radio coefficient per subcarrier. Based on an estimated frequency error $\Delta f$, a cross-talk or coupling or interference between the subcarriers may be estimated in terms of an additional complex channel coefficient.

Embodiments of the channel estimator 110 may determine or estimate the frequency offset $\Delta f$ in different ways. In some embodiments a narrowband test signal may be transmitted by a transmitter, so to enable estimation of the frequency offset $\Delta f$ by comparing a frequency of the received narrow band test signal to a known frequency based on which the narrow test band signal was transmitted. This concept is somewhat similar to the implementation of a frequency correction burst as part of GSM (Global System for Mobile communication). In some embodiments a plain sinusoidal signal may be used as narrowband signal, e.g. having a duration of a radio frame or TDMA (Time Division Multiple Access) frame. Estimation can be realized in embodiments by zero-crossing detection, where a zero-crossing detector can estimate a short-time average of an instantaneous frequency by evaluating time differences between zero-crossings of the signal.

Another concept for estimating the frequency offset $\Delta f$ can be based on a system matrix. E.g. in embodiments using OFDM, subcarriers may not be completely occupied all the time. Generally, in OFDM systems subcarriers, which are not occupied, may be simply switched off. In a perfect system there would be no energy in a non-occupied or switched-off subcarrier. In a real system having the frequency offset $\Delta f$, however, energy in a non-occupied or switched off subcarrier may be determined. Since said energy due to inter-subcarrier interference or cross-talk or coupling, is present. The determined energy in such a subcarrier may serve as a basis for estimation of the frequency offset $\Delta f$ in embodiments.

In embodiments pilot or reference symbols may be evaluated in order to determine the frequency of said $\Delta f$. In other words, a transmitter may transmit known symbols, i.e. pilot or reference symbols, based on which the frequency offset $\Delta f$ may be determined. These known symbols may correspond to pilot or reference subcarriers, enabling estimation of the coupling, cross-talk or inter-subcarrier interference. This concept may be somewhat similar to the first concept as described above, where a pilot or reference carrier serves as a narrow band test signal. Moreover, in embodiments correlation in the frequency domain a known pilot or reference symbol pattern can be evaluated in order to determine the frequency offset $\Delta f$.

In embodiments, a transmitter may therefore be adapted to provide respective pilot symbols or pilot patterns, pilot or reference subcarriers, respectively. In case of OFDM systems, estimation of the frequency offset $\Delta f$ may be carried out at a receiver, i.e. by a channel estimator 110 according to the above described embodiments.

Further embodiments may foresee to provide a feedback to a transmitter, i.e. to inform the transmitter on the estimated frequency offset $\Delta f$. In embodiments of a transmitter, according measures can be taken in order to compensate for the estimated frequency offset $\Delta f$. In these embodiments, measures of predistortion as for example Tomlinson-Harashima-precoding may be carried out. The receiver or the channel estimator 110 may provide the potential transmitter with information, which is may enable the transmitter to carry out respective precoding. This may include a simple information on a measure for the frequency $\Delta f$ or, in other embodiments, an information on a partially or completely estimated channel matrix, channel matrix updates respectively. In other embodiments, a combination of pilot or reference subcarriers and non-occupied subcarriers may be used in order to estimate or determine the frequency offset $\Delta f$. In other words, the channel estimator 110 may be adapted to estimate the frequency offset $\Delta f$, based on a combination of reference or pilot subcarriers and non-occupied subcarriers in an OFDM system. The channel estimator 110 may be adapted to estimate the frequency offset $\Delta f$ based on inter-symbol interference, which is detected in one of the above-mentioned arrays.

In embodiments the at least one additional complex channel coefficient may correspond to coupling in terms of one subcarrier to another subcarrier. In other words, such coupling may be mutual, it may in other embodiments occur only on one side. In other words, if one subcarrier interferes with the other, the other may not necessarily interfere the one subcarrier. In other embodiments, there may be many subcarriers, as for example in OFDM systems. There, a large number of subcarriers occurs, where due to the according processing, i.e. the cyclic pre- or postfixes, the last subcarrier may also interfere with the first subcarrier, i.e. such interference or coupling or cross-talk may be cyclic.

In embodiments the channel estimator 110 may be adapted for adaptively estimating the radio channel, i.e.

the radio channel may be estimated by the channel estimator 110 in an iterative manner, i.e. frequent updates may be estimated, taking into account prior estimates.

In embodiments the channel estimator 110 may be adapted for estimating the radio channel in terms of a right circulant channel matrix. The right circulant channel matrix being quadratic and having as many rows or columns as there are subcarriers in the multicarrier signal.

In other words, the radio channel may be estimated in terms of a matrix, having a dimension that enables one complex channel coefficient per combination of any two subcarriers including each subcarrier combined with itself. This structure corresponds to a sort of coupling or cross-talk or interference matrix, where the direct radio channel coefficients for each subcarrier are given on the diagonal, and the coupling, cross-talk or interference measures are given by the off-diagonal elements. Due to the cyclic coupling which is evoked by the frequency error $\Delta f$ and the analog-to-digital conversion, the radio channel matrix can be right circulant. The right circulant radio channel matrix modeling the cross-talk also between the subcarrier with the highest frequency and the subcarrier with the lowest frequency, vice-versa respectively.

As has been mentioned above, the channel estimator 110 can be adapted to estimate the frequency offset or frequency error $\Delta f$ based on said matrix, in which off-diagonal elements may indicate the respective coupling between the subcarriers, and therewith provide a measure based on which the frequency offset $\Delta f$ can be determined.

In embodiments the equalizer 120 may be adapted for providing the soft output based on a maximum likelihood sequence detection or a maximum a-posteriori sequence detection with tail biting. Tail biting refers to the cyclic nature of the coupling as it has been examined, for example for cyclic convolutional channel codes before, c.f. Howard H. Ma, Jack K. Wolf, "On tail biting convolutional codes", IEEE Transactions on Communications, Vol. 34, no.2 February 1986.

The maximum likelihood detectors and maximum a-posteriori detectors can be applied in a similar manner on the multicarrier signal, where the estimated radio channel, for example in terms of the right circulant radio channel matrix, can be used as channel impulse response. Generally, such detectors may be used as sequence or single symbol detectors. In other words, the equalizer 120 may in embodiments be adapted for providing the soft output based on a maximum likelihood single symbol detection with tail biting or a maximum a-posteriori single symbol detection with tail biting.

In other embodiments the equalizer 120 may be adapted for providing the soft output based on a time domain equalization. In other words, the equalizer 120 may then comprise a frequency-time transformer for transforming the baseband representation of the multicarrier signal to the time domain. In a similar manner, the right circulant radio channel matrix in the frequency domain, may be transformed to the time domain, yielding a diagonal time domain radio channel matrix. In the time domain, equalization can then be applied, for example by means of zero forcing or minimum mean square error equalization, which can be applied blockwise.

Embodiments may comprise a receiver 200, as it is also indicated in Fig. 1. As can be seen, the receiver 200 comprises the circuit 100. The receiver 200 may be adapted for providing the soft output based on the multicarrier signal, the multicarrier signal comprising at least two subcarriers, as it has been explained above. As can be seen from Fig. 1 the receiver 200 comprises a receiver front-end 210 for receiving the multicarrier signal in a transmission band, the transmission band having a carrier frequency $f_0$. Moreover, the receiver 200 comprises the down-converter 220 for converting the multicarrier signal from the transmission band to a baseband to obtain a baseband representation, the baseband representation being based on a locally generated carrier frequency, the locally generated carrier frequency differing from the carrier frequency by a frequency error $\Delta f$, the frequency error $\Delta f$ introducing the coupling between the two subcarriers in the baseband. Furthermore, the receiver 200 may comprise a time-frequency transformation 230 for transforming the baseband representation to the frequency domain to obtain a spectral representation. In other words, the channel estimator 110 may be adapted for estimating a radio channel based on the spectral representation, the estimated radio channel comprising an estimator on the coupling between the two subcarriers in the baseband. Moreover, the equalizer 120 may be adapted for providing the soft output based on the estimated radio channel and the spectral representation.

As indicated in Fig. 1 the receiver front-end 210 provides the radio frequency signal, which is exemplified by the signal sketch 240. The downconverter 220 then converts the signal from the transmission band to the baseband, which is indicated by the signal sketch 242. The time-frequency transformation 230 may then transform the baseband signal to a spectral representation, which is exemplified by the sketch of the spectrum 244. The receiver 200 may further comprise an analog-to-digital converter for converting the baseband representation to a digital baseband representation prior to the time-frequency transformation 230. The analog-to-digital converter may contribute to the coupling between the individual subcarriers of the multicarrier signal.

In embodiments the receiver 200 may further comprise a synchronizer for selecting a number of samples from the digital baseband representation to be provided to the time-frequency transformation 230 for transforming. In other words, at this stage, a number of samples may be selected from the digital baseband representation which corresponds to the number of subcarriers. This may correspond to the removal of a cyclic pre- or postfix.

In embodiments the multicarrier signal may correspond to an OFDM signal comprising a multiplicity of subcarriers and the coupling may occur between adjacent subcarriers and between the subcarriers with the lowest and highest frequencies.

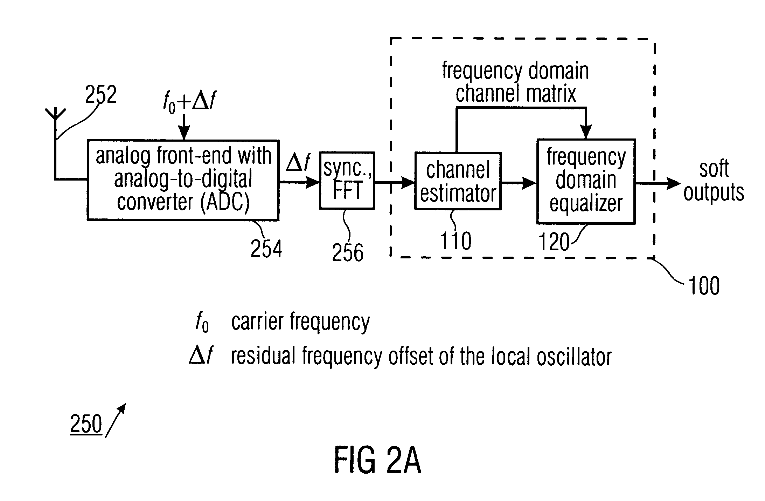

Fig. 2a illustrates another embodiment of a receiver structure 250 comprising an embodiment of the circuit 100. The receiver structure shown in Fig. 2a can be adapted for receiving multicarrier transmissions to which imperfect local oscillator signal may be applied. In other words, with the receiver structure 250 shown in Fig. 2a, frequency errors $\Delta f$ can be tolerated in a wider range than it may be possible with conventional receiver structures.

Fig. 2a shows a receive antenna 252 for receiving the radio waves and for converting the radio waves into a radio frequency signal. The receive antenna 252 is followed by an analog front-end 254 with an analog-to-digital converter (ADC). Thereafter, synchronization and frequency transformation is carried out in the synchronization module 256, which contains a fast Fourier transformer (FFT) unit. The spectral representation of the baseband signal is then provided to the channel estimator 110 for estimating the radio channel in the frequency domain and for being equalized by the equalizer 120, which is in the example depicted in the Fig. 2a implemented as a frequency domain equalizer. At the output of the equalizer 120 soft outputs are available.

Setting out from the fact that the carrier frequency is not perfectly known and consequently, a frequency offset or frequency error $\Delta f$ exists, the frequency error $\Delta f$ is taken into account for data detection according to embodiments.

As shown in Fig. 2a after the FFT 256, the channel estimator 110 adaptively estimates the channel properties of each subcarrier. Due to the fact that there exists the frequency error $\Delta f$, it is assumed for the following example that the subcarriers mutually interfere, which results in a multi tap channel seen by each subcarrier instead of single tap channel. The samples of these multi tap channels can be related to the ideal system by using a frequency domain synchronization windowing with a set frequency error or offset $\Delta f$ and taking the resulting values at the center frequencies of the subcarriers.

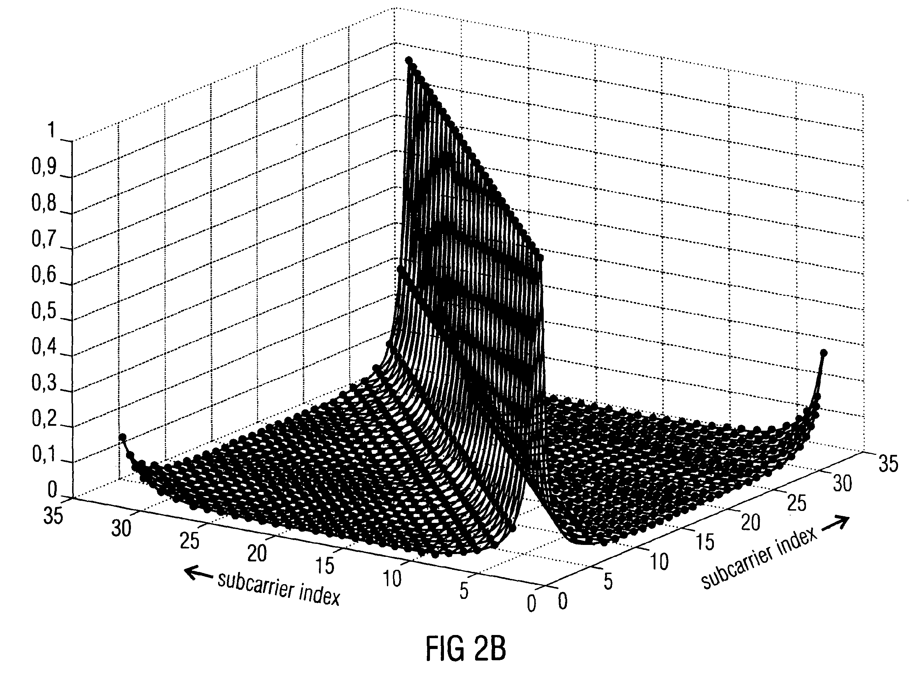

Fig. 2b illustrates the radio channel matrix for such an example. It can be seen, that the matrix in Fig. 2b resembles a right circulant shape. This shape motivates that, for example, subcarriers 1 and $Q$, i.e. the subcarriers with the lowest and the highest frequencies interfere with each other as if they were direct neighbors.

Fig. 2b again illustrates an example of an OFDM signal having 30 subcarriers, it can be seen, that there is coupling between the first and the last subcarriers as well as between adjacent subcarriers in the present case.

A possible detector or equalizer 120 may then make use of the fact that obviously the finite state machine which can be used to model the transmission starts and ends in the same state. When connecting the start and the end states, a ring-type state sequence results which looks like a serpent that bites its tail. This kind of structure has been shown in literature of channel coding as "tail biting" codes, c.f. Howard H. Ma, Jack K. Wolf, "On tail biting convolutional codes" IEEE Transactions on Communications, Vol. Communication 34, no.2, February 1986. The resulting decoder, equalizer 120 respectively, may set out from these findings, however, being used as equalizers.

In addition to the maximum likelihood sequence detection scheme used for the decoding of tail biting codes, single symbol detectors can be devised both as maximum likelihood and maximum a-posteriori probability versions, yielding respective equalizers. Maximum a-posteriori probability sequence detection is also conceivable.

As another option, owing to the ring-type structure, a time domain equalizer may be utilized. Referring to Fig. 2a when using a time domain equalizer the spectral baseband representation may be transformed to the time domain, for example using an inverse FFT (IFFT). In the time domain, a linear time domain equalizer may then be utilized, for example in terms of a zero forcing block equalization or a minimum mean square error block equalization.

Cyclic convolutional channel codes are basically defined in the Galois-field GF (2). Embodiments may, however, assume complex or higher order modulated data symbols, and may therewith be based on Galois-fields with higher dimensions. However, the embodiment may be based on a finite state machine, enabling a Trellis-based decoding, detection, respectively. Moreover, in cyclic convolutional codes the generation of said codes is time-variant, whereas the presently illuminated time-variant frequency offset $\Delta f$ yields a time-variant system matrix. Time-variant cyclic convolutional channel codes may therewith be implemented without estimating the frequency offset $\Delta f$, where embodiments of the present invention make use of the estimation of the frequency offset $\Delta f$, as it was described above.

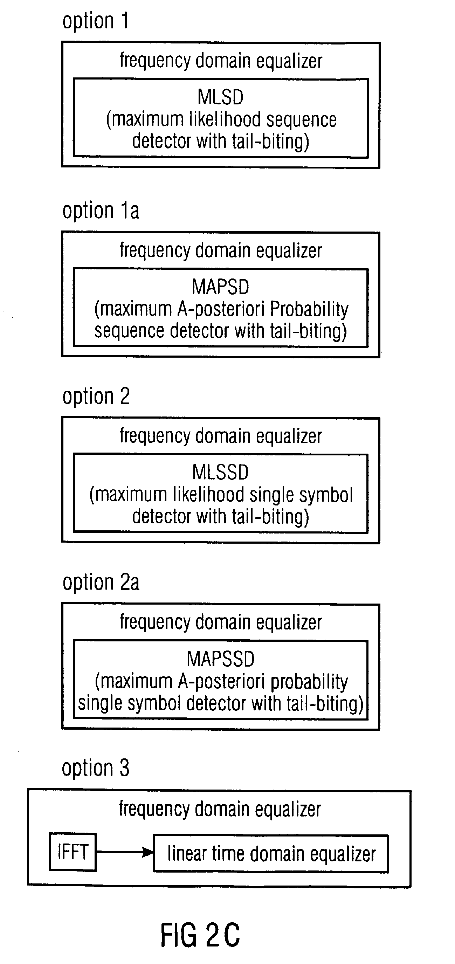

Fig. 2c summarizes the different equalization options; these options are

- Option 1: Maximum likelihood sequence detector with tail-biting (MLSD)

- Option 1a: Maximum a-posteriori probability sequence detector with tail-biting (MAPSD)

- Option 2: Maximum likelihood single symbol detector with tail-biting (MLSSD)

- Option 2a: Maximum a-posteriori probability single symbol detector with tail-biting (MAPSSD)

- Option 3: IFFT followed by a linear time domain equalization, for example zero forcing or minimum mean square error.

In the following a mathematical representation of the above-described concepts will be given. In general, each OFDM symbol may contain $M_i$ binary information bits, $u_\mu$, $\mu=$1L $M_i$, which have the average information bit energy $E_b$. To generate the OFDM symbol, the information bits are first fed into the FEC encoder which generates $M_i/R_c$ encoded bits, $R_c$ being the code rate. In order to match the number $M_i/R_c$ of encoded bits to consecutive OFDM symbols, puncturing and rate matching may be applied. After appropriate puncturing and rate matching, the number of resulting encoded bits is given by

$$M_c \leq M_i / R_c \ .\qquad(1)$$

These encoded bits can be denoted by $c_v$, $v=$1L $M_c$. Now, assume that the symbol alphabet, from which the complex-valued data symbols $\underline{d}_m$, $m=$1L $M$, are taken, has the cardinality $|\underline{V}|$. Hence, each data symbol carries ld($|\underline{V}|$) encoded bits. A viable approach is the use of $2^{\text{ld}(|\underline{V}|)}$-QAM as the data modulation. It may be advisable to choose ld($|\underline{V}|$) as an **even** integer because Gray encoding is easily accessible in this case. Using $2^{\text{ld}(|\underline{V}|)}$-QAM data modulation, each OFDM symbol carries ld($|\underline{V}|$)·$M$ encoded bits. In order to obtain the best possible match between $M_c$ and ld($|\underline{V}|$)·$M$, the puncturing and rate matching may be demanded to fulfill the requirement

$$N_{\text{OFDM}} = \frac{M_c}{\text{ld}\left(|\underline{V}|\right) \cdot M} \in \yen \ .\qquad(2)$$

$N_{\text{OFDM}}$ is the number of OFDM symbols required to carry the information contained in the $M_u$ information bits mentioned above. A special case is given, when $N_{\text{OFDM}}$ is equal to one, i.e. when the number of encoded bits $M_c$ perfectly fit on M·$2^{\text{ld}(|V|)}$-QAM data symbols.

Generally, the resulting code rate is

$$R = \frac{M_u}{N_{\text{OFDM}} \cdot \left(\text{ld}\left(|\underline{V}|\right) \cdot M\right)} \ .\qquad(3)$$

With (3), the energy per encoded bit is given by

$$E_c = \frac{M_u}{N_{\text{OFDM}} \cdot \left(\text{ld}\left(|\underline{V}|\right) \cdot M\right)} E_b \ .\qquad(4)$$

To facilitate the application of implementation efficient fast Fourier transform (FFT) and inverse fast Fourier transform (IFFT) algorithms at both the receivers and the transmitters, respectively, it can be assumed that the number of subcarriers $M$ is an integer power of 2:

$$M = 2^\omega, \quad \omega \in \yen \ .\qquad(5)$$

The complex-valued data symbols are arranged in the data vector

$$\underline{d} = \left( \underline{d}_1, \underline{d}_2 \mathrm{L} \ \underline{d}_M \right)^{\mathrm{T}}, \quad \underline{d}_m \in \underline{\mathrm{V}}, m = 1\mathrm{L} \ M \ . \qquad (6)$$

Each data vector $\underline{d}$ is mapped onto a unique OFDM symbol. In the OFDM concept, this mapping results in the OFDM symbol vector $\underline{b}$, which represents the discrete-time version of the OFDM symbol. With the $M \times M$ matrix $\underline{D}_{(M)}$ of the $M$ point inverse discrete Fourier transform (IDFT) having the elements

$$\left[ \underline{D}_{(M)} \right]_{\nu,\mu} = \frac{1}{\sqrt{M}} \left( \exp \left\{ \mathrm{j} \frac{2\pi}{M} (\nu - 1) \cdot (\mu - 1) \right\} \right), \quad \nu, \mu = 1\mathrm{L} \ M \ . \qquad (7)$$

in the $\nu$-th row and the $\mu$-th column, the OFDM symbol vector is given by

$$\underline{b}_{\mathrm{OFDM}} = \underline{D}_{(M)} \underline{d} \ . \qquad (8)$$

Now, $\underline{b}_{\mathrm{OFDM}}$ of (8) is transmitted over the mobile radio channel considered as a *W*-path channel. To facilitate a single-tap equalization technique like in regular OFDM, the deployment of either cyclic prefixes or cyclic postfixes is usually considered.

At the receiver, with the system bandwidth *B*, a sample is taken every *B* seconds, i.e. a sample is taken at the following time instants:

$$t_m = \frac{m - 1}{B}, \quad m = 1 \cdots M. \qquad (9)$$

This sampling forms the basis for the further description.

First a quadratic, right circulant $M \times M$ reception system matrix is defined

$$
\underline{\boldsymbol{H}}_t = \begin{pmatrix}
\underline{a}_1 & 0 & \cdots & 0 & 0 & \underline{a}_W & \cdots & \underline{a}_2 \\
\underline{a}_2 & \underline{a}_1 & 0 & \cdots & 0 & 0 & \ddots & \vdots \\
\vdots & \underline{a}_2 & \underline{a}_1 & 0 & 0 & \cdots & 0 & \underline{a}_W \\
\underline{a}_W & \ddots & \underline{a}_2 & \ddots & \vdots & \cdots & 0 & 0 \\
0 & \underline{a}_W & \ddots & \ddots & \underline{a}_1 & \cdots & \ddots & 0 \\
\vdots & 0 & \underline{a}_W & \ddots & \underline{a}_2 & \underline{a}_1 & 0 & 0 \\
\vdots & \vdots & 0 & \ddots & \ddots & \ddots & \ddots & 0 \\
0 & 0 & \cdots & 0 & \underline{a}_W & \cdots & \underline{a}_2 & \underline{a}_1
\end{pmatrix}. \tag{10}
$$

With $\underline{H}_t$ of (10), and with the additive noise vector $\underline{n}_t$, the reception system equation is found

$$
\underline{e} = \underline{\boldsymbol{H}}_t \underline{\boldsymbol{D}}_{(M)} \underline{d} + \underline{n}_t , \tag{11}
$$

which forms the basis for the further receiver design.

The frequency imperfection in the receiver can be regarded as a diagonal matrix which covers the modulation with a constant frequency, $\Delta f$:

$$
\underline{\boldsymbol{F}}_t = \begin{pmatrix}
1 & 0 & \cdots & 0 \\
0 & \exp\left\{ j2\pi\Delta f \dfrac{1}{B} \right\} & \cdots & 0 \\
\vdots & \vdots & \ddots & \vdots \\
0 & 0 & \cdots & \exp\left\{ j2\pi\Delta f \dfrac{M-1}{B} \right\}
\end{pmatrix}. \tag{12}
$$

The received signal vector of (11) is hence found to be

$$
\underline{e}_{\underline{F}_t} = \underline{\boldsymbol{F}}_t \underline{\boldsymbol{H}}_t \underline{\boldsymbol{D}}_{(M)} \underline{d} + \underline{\boldsymbol{F}}_t \underline{n}_t , \tag{13}
$$

Since $\underline{H}_t$ defined in (10) is a quadratic and right circulant matrix, its Fourier transform is a diagonal $M \times M$ matrix

$$\underline{\boldsymbol{H}}_{\text{f}} = \underline{\boldsymbol{D}}_{(M)}^{\text{H}} \underline{\boldsymbol{H}}_{\text{t}} \underline{\boldsymbol{D}}_{(M)}$$

$$= \begin{pmatrix} \underline{H}_{\text{f},1} & 0 & \cdots & 0 \\ 0 & \underline{H}_{\text{f},2} & \cdots & 0 \\ \vdots & \vdots & \ddots & \vdots \\ 0 & 0 & \cdots & \underline{H}_{\text{f},M} \end{pmatrix}, \tag{14}$$

or, alternatively,

$$\underline{\boldsymbol{H}}_{\text{t}} = \underline{\boldsymbol{D}}_{(M)} \underline{\boldsymbol{H}}_{\text{f}} \underline{\boldsymbol{D}}_{(M)}^{\text{H}}. \tag{15}$$

Setting out from (14), the following identities can be found

$$\underline{\boldsymbol{H}}_{\text{f}} \underline{\boldsymbol{D}}_{(M)}^{\text{H}} = \underline{\boldsymbol{D}}_{(M)}^{\text{H}} \underline{\boldsymbol{H}}_{\text{t}} . \tag{16}$$

and

$$\underline{\boldsymbol{D}}_{(M)} \underline{\boldsymbol{H}}_{\text{f}} = \underline{\boldsymbol{H}}_{\text{t}} \underline{\boldsymbol{D}}_{(M)} . \tag{17}$$

Using (17), (13) becomes

$$\underline{\boldsymbol{e}}_{\underline{F}_{\text{t}}} = \underline{\boldsymbol{F}}_{\text{t}} \underline{\boldsymbol{D}}_{(M)} \underline{\boldsymbol{H}}_{\text{f}} \underline{\boldsymbol{d}} + \underline{\boldsymbol{F}}_{\text{t}} \underline{\boldsymbol{n}}_{\text{t}} , \tag{18}$$

Since $\underline{\boldsymbol{F}}_{\text{t}}$ is a diagonal matrix, its frequency domain representation, $\underline{\boldsymbol{F}}_{\text{f}}$ is a right circulant matrix. Using

$$\underline{\boldsymbol{F}}_{\text{f}} = \underline{\boldsymbol{D}}_{(M)}^{\text{H}} \underline{\boldsymbol{F}}_{\text{t}} \underline{\boldsymbol{D}}_{(M)} , \tag{19}$$

(18) becomes

$$\underline{e}_{\underline{F}_t} = \underline{D}_{(M)}\underline{F}_f\underline{H}_f\underline{d} + \underline{F}_t\underline{n}_t \, , \tag{20}$$

Furthermore, by applying the FFT, (20) becomes the frequency domain received vector

$$\underline{e}_f = \underline{F}_f\underline{H}_f\underline{d} + \underline{D}_{(M)}^{\mathrm{H}}\underline{F}_t\underline{n}_t = \underline{F}_f\underline{H}_f\underline{d} + \underline{n}_f^{(n,k)} \, . \tag{21}$$

The noise in the frequency domain has the covariance matrix

$$\underline{R}_{\mathrm{nf}} = k_B T_0 \cdot \underline{I}_M = \underline{R}_{\mathrm{nt}}. \tag{22}$$

The new system matrix $\underline{F}_f\underline{H}_f$, now is a right circulant matrix and no longer a diagonal matrix as in the conventional OFDM system.

The known elements of $\underline{F}_f\underline{H}_f$ can be used in embodiments of the equalizer 120 as the impulse response for the deployment of an ML or MAP detector according to the method used in the decoding of tail biting convolutional codes, cf. H.H. Ma above.

A linear version of the receiver is also conceivable in embodiments, e.g. by applying zero forcing block linear equalization (ZF-BLE) or minimum mean square error block linear equalization (MMSE-BLE).

Depending on certain implementation requirements of the inventive methods, the inventive methods can be implemented in hardware or in software. The implementation can be performed using a digital storage medium, in particular a disc, a DVD or a CD having electronically readable control signals stored thereon, which cooperate with a programmable computer system such that the inventive methods are performed. Generally, the present invention is, therefore, a computer program product with a program code stored on a machine-readable carrier, the program code being operative for performing one of the inventive methods when the computer program product runs on a computer. In other words, the inventive methods are, therefore, a computer program having a program code for performing at least one of the inventive methods when the computer program runs on a computer.

All of the foregoing has been particularly shown and described with reference to particular embodiments thereof, it will be understood by those skilled in the art that various other changes in the form and details may be made without departing from the spirit and scope thereof. It is to be understood that various changes may be made in adapting to different embodiments without departing from the broader concepts disclosed herein and comprehended by the claims that follow.

**Claims**

1. A circuit (100) for providing a soft output based on a baseband representation of a multicarrier signal, the multicarrier signal having at least two subcarriers, the baseband representation having a frequency error ($\Delta f$), the frequency error ($\Delta f$) introducing a coupling between the at least two subcarriers, comprising
   a channel estimator (110) for estimating a radio channel based on the baseband representation, the estimated radio channel comprises an estimate on the coupling between the two subcarriers in the baseband;
   an equalizer (120) for providing the soft output based on the estimated radio channel and the baseband representation.

2. The circuit (100) of claim 1, wherein the channel estimator (110) is adapted for estimating the frequency error ($\Delta f$) and at least one complex radio channel coefficient for each of the at least two subcarriers, wherein the channel estimator (110) is further adapted for determining the coupling in terms of at least one additional complex channel coefficient for each of the at least two subcarriers based on the frequency error ($\Delta f$) and the at least one complex radio coefficient for each of the at least two subcarriers.

3. The circuit (100) of claim 2, wherein the at least one additional complex channel coefficient corresponds to a coupling in terms of one subcarrier to another subcarrier.

4. The circuit (100) of one of the preceding claims, wherein the channel estimator (110) is adapted for adaptively estimating the radio channel.

5. The circuit (100) of one of the preceding claims, wherein the channel estimator (110) is adapted for estimating the radio channel in terms of a right circulant channel matrix, the right circulant channel matrix being quadratic and having as many rows or columns as there are subcarriers in the multicarrier signal.

6. The circuit (100) of one of the preceding claims, wherein the equalizer (120) is adapted for providing the soft output based on a maximum likelihood sequence detection with tail biting or a maximum a-posteriori sequence detection with tail biting.

7. The circuit of one of the claims 1 to 5, wherein the equalizer (120) is adapted for providing the soft output based on a maximum likelihood single symbol detection with tail biting or a maximum a-posteriori single symbol detection with tail biting.

8. The circuit (100) of one of the claims 1 to 5, wherein the equalizer (120) is adapted for providing the soft output based on a time domain equalization.

9. A receiver (200) for providing a soft output based on a multicarrier signal, the multicarrier signal comprising at least two subcarriers, comprising
a receiver front-end (210) for receiving the multicarrier signal in a transmission band, the transmission band having a carrier frequency ($f_0$);
a down-converter (220) for converting the multicarrier signal from the transmission band to a baseband to obtain a baseband representation, the baseband representation being based on a locally generated carrier frequency, the locally generated carrier frequency differing from the carrier frequency ($f_0$) by a frequency error ($\Delta f$), the frequency error ($\Delta f$) introducing a coupling between the two subcarriers in the baseband;
a time-frequency transformation (230) for transforming the baseband representation to the frequency domain to obtain a spectral representation;
a circuit (100) according to one of the claims 1 to 8, for providing the soft output based on the spectral representation as baseband representation.

10. The receiver (200) of claim 9, further comprising an analog-to-digital converter for converting the baseband representation to a digital baseband representation prior to the time-frequency transformation (230).

11. The receiver of claim 10, further comprising a synchronizer for selecting a number of samples from the digital baseband representation to be provided to the time-frequency transformation (230) for transforming.

12. The receiver (200) of claim 11, wherein the selecting corresponds to a removal of a cyclic pre- or postfix from the digital baseband representation.

13. The receiver (200) of one of the claims 9 to 12, wherein the multicarrier signal corresponds to an OFDM-signal (Orthogonal Frequency Division Multiplexing) comprising a multiplicity of subcarriers and wherein the coupling occurs between adjacent subcarriers and between the subcarriers with the lowest and the highest frequencies.

14. A method for providing a soft output based on a baseband representation of a multicarrier signal, the multicarrier signal having at least two subcarriers, the baseband representation having a frequency error ($\Delta f$), the frequency error ($\Delta f$) introducing a coupling between the at least two subcarriers, comprising the steps of
estimating a radio channel based on the baseband representation, the estimated radio channel comprises an estimate on the coupling between the two subcarriers in the baseband;
providing the soft output based on the estimated radio channel and the baseband representation.

15. A computer program having a program code for performing the method of claim 14, when the computer program runs on a computer or processor.

EP 2 257 011 A1

FIG 1

252

$f_0 + \Delta f$

| analog front-end with analog-to-digital converter (ADC) |
| 254 |

$\Delta f$

| sync., FFT |
| 256 |

frequency domain channel matrix

| channel estimator |
| 110 |

| frequency domain equalizer |
| 120 |

soft outputs

100

$f_0$    carrier frequency

$\Delta f$    residual frequency offset of the local oscillator

250

FIG 2A

FIG 2B

EP 2 257 011 A1

option 1

| frequency domain equalizer |
| --- |
| MLSD<br>(maximum likelihood sequence<br>detector with tail-biting) |

option 1a

| frequency domain equalizer |
| --- |
| MAPSD<br>(maximum A-posteriori Probability<br>sequence detector with tail-biting) |

option 2

| frequency domain equalizer |
| --- |
| MLSSD<br>(maximum likelihood single symbol<br>detector with tail-biting) |

option 2a

| frequency domain equalizer |
| --- |
| MAPSSD<br>(maximum A-posteriori probability<br>single symbol detector with tail-biting) |

option 3

| frequency domain equalizer |
| --- |
| IFFT ——▶ linear time domain equalizer |

FIG 2 C

302

$f_0$

frequency domain
channel matrix

| analog front-end with<br>analog-to-digital<br>converter (ADC) | → | sync.,<br>FFT | → | channel<br>estimator | → | frequency<br>domain<br>equalizer | → soft<br>outputs |

304

306

308

310

$f_0$   carrier frequency

FIG 3A
(STATE OF THE ART)

FIG 3B
(STATE OF THE ART)

Europäisches
Patentamt

European
Patent Office

Office européen
des brevets

# EUROPEAN SEARCH REPORT

**Application Number**

EP 09 00 7209

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/095697 A (COHDA WIRELESS PTY LTD [AU]; ALEXANDER PAUL DEAN [AU]; GRANT ALEXANDER) 30 August 2007 (2007-08-30)<br>* page 17, paragraph 2 *<br>* page 17, last paragraph - page 18, paragraph 1 *<br>* page 30, line 25 - line 26 *<br>* page 35, line 23 - page 36, line 3 *<br>* page 36, line 10 - line 11 *<br>* page 39, line 8 - page 40, line 5 *<br>* page 40, line 16 - line 19 *<br>* figure 8 *<br>----- | 1-15 | INV.<br>H04L27/26<br>H04L25/02<br>H04L25/03 |
| X | WO 2007/112489 A (NAT ICT AUSTRALIA LTD [AU]; ZHAO MING [AU]; SHI ZHENNING [AU]; REED MA) 11 October 2007 (2007-10-11)<br>Equation 11<br>* page 12, line 23 - line 25 *<br>* page 13, line 12 - line 14 *<br>* page 13, line 22 - last line *<br>* figure 1 *<br>----- | 1,4,6-15 | |

| | | | TECHNICAL FIELDS SEARCHED (IPC) |
|---|---|---|---|
| | | | H04L |

The present search report has been drawn up for all claims

| Place of search | Date of completion of the search | Examiner |
|---|---|---|
| Berlin | 3 November 2009 | Farese, Luca |

EPO FORM 1503 03.82 (P04C01)

EP 2 257 011 A1

**ANNEX TO THE EUROPEAN SEARCH REPORT
ON EUROPEAN PATENT APPLICATION NO.**

EP 09 00 7209

This annex lists the patent family members relating to the patent documents cited in the above-mentioned European search report.
The members are as contained in the European Patent Office EDP file on
The European Patent Office is in no way liable for these particulars which are merely given for the purpose of information.

03-11-2009

| Patent document cited in search report | Publication date | Patent family member(s) | Publication date |
|---|---|---|---|
| WO 2007095697 A | 30-08-2007 | AU 2007219067 A1 | 30-08-2007 |
| WO 2007112489 A | 11-10-2007 | AU 2007233563 A1<br>EP 2002622 A1<br>JP 2009532957 T<br>KR 20080108591 A<br>US 2009103666 A1 | 11-10-2007<br>17-12-2008<br>10-09-2009<br>15-12-2008<br>23-04-2009 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Howard H. Ma ; Jack K. Wolf.** On tail biting convolutional codes. *IEEE Transactions on Communications,* February 1986, vol. 34 (2

- **Howard H. Ma ; Jack K. Wolf.** On tail biting convolutional codes. *IEEE Transactions on Communications,* February 1986, vol. Communic (2